# EUROPEAN PATENT APPLICATION

(11) **EP 4 715 389 A1**
(43) Date of publication of application: **25.03.2026**
(21) Application number: 24201158.3
(22) Date of filing: 18.09.2024
(51) Int. Cl.: G01N 35/10

(54) **CAPACITIVE LIQUID VOLUME MEASUREMENT**

(71) Applicant: TECAN Trading AG, 8708 Männedorf (CH)
(72) Inventor: PIEHLER, Andreas, 7324 Vilters (CH); OTT, Philipp, 8496 Steg (CH); FREI, Luca, 8634 Hombrechtikon (CH)
(74) Representative: Troesch Scheidegger Werner AG

(57) **Abstract**

A laboratory automation apparatus with a liquid volume measurement functionality comprising a working table, a pipettor comprising a pipetting head with an electrode providing a capacitive sensor with a reference electrode. A robotic arm is configured to move the pipetting head above the working table. A processor is operatively coupled to the robotic arm, to the pipettor and to the electrode by an electronic circuit. A capillary is located on the working table having an opening for receiving a target amount of liquid from the pipettor to form an air-liquid meniscus in the capillary. The robotic arm is configured to hover the electrode over the capillary to detect a change in capacitance related to the position of the meniscus, and the processor is configured to calculate the transferred amount of liquid from the position of the meniscus in the capillary.

## Description

### FIELD OF THE INVENTION

The current invention relates to a laboratory automation apparatus with a liquid volume measurement functionality based on capacitive measurements. A further aspect relates to a method for determination of the volumetric performance of a laboratory automation apparatus using capacitive measurements and a computer program for executing the method.

### BACKGROUND OF THE INVENTION

The automation of workflows in diagnostic or clinical laboratories is of key importance as the number of samples has significantly increased demanding faster turnaround times such that certain operations require laboratory automation apparatuses for tasks that used to be manually executed. The laboratory automation apparatuses contributed for example to the fast development of high-speed test methods that could be performed for very high sample numbers at relatively low cost during the COVID pandemic. The laboratory automation apparatuses include i) robotic arms for moving or handling labware components on a working table of the laboratory automation apparatus, and ii) liquid pipettors for aspirating and/or dispensing liquids in the labware components. A pipettor may include a plurality (for example eight) pipetting heads coupled to a robotic arm that may be separate from another robotic arm used for handling the labware components; iii) sample processing equipment such as stirrers, heaters, coolers, thermocyclers, analytical testing devices such as microplate readers, DNA preparation equipment, DNA sequencers including microflow chips, and the like.

The working table of the laboratory automation apparatus has limited space leading to a narrow arrangement of the labware components and labware having miniaturized dimensions. This requires accurate positioning of the labware components and the liquid pipettors and therewith a precise movement of the robotic arms.

The sample volume may be in the micro- or sub-microliter range and therefore the accurate aspiration and dispensing of small volumes is essential for a reliable and robust operation of the laboratory automation apparatus. A regular functionality check by the user of the device or a check for Quality Control (QC) by a field service engineer and/or calibration of the dispensed volume may be required. Some of the test methods are standardized and included in the ISO 23783-2 standard: "Automated liquid handling systems - Procedures for the determination of volumetric performance".

The dispensed volume may be gravimetrically measured requiring a high accuracy microbalance which is expensive and special precautions preventing sample evaporation must be taken. For example, delicate and fragile calibration standards used may be damaged during transport. Alternatively, absorbance-based systems based on a photometer and liquids containing dyes with a known concentration are used requiring additional dye solutions and expensive photometers. The single dye, dual dye and fluorescence dye methods are summarized in the ISO 23783-2 standard.

US20140150522A1 discloses a measurement device containing one or more capillaries to measure the volume of a dispensed fluid. The fluid is manually pipetted and drawn into a thin capillary and the position of the meniscus (air-liquid phase boundary) is detected using a viewing window and the position together with the dimensions of the capillary define the dispensed volume. The position of the meniscus may be determined by someone observing the capillary or may be determined by a separate and dedicated sensor.

US20080233009A1 discloses the use of a capillary for the volume calibration based on visual detection of the meniscus using a graduated scale. The amount of liquid used for the calibration is pipetted into an opening of the capillary using a robotic arm of an automated workstation.

DE102020103211A1 discloses a device with a plurality of capillaries used for volume calibration, the position of the meniscus for each capillary is detected with a digital camera or flatbed scanner. Details for deriving the accurate position of the fluid front from the pixelated images and calculating the volumetric performance of the automated liquid handler can be found in ISO 23783-2.

US20240217102A1 discloses a method for accurately positioning a robotic arm on the working table of a laboratory automation apparatus. The robotic arm includes a first electrode and the arm scans over a capacitive reference object providing a measuring capacitor with the first electrode. The reference object is at a known position on the working table and has a specific 3-dimensional shape, for example a recessed triangle, defining different heights for the dielectric medium (air). Detection of the shape of the reference object is used for accurate positioning of the robotic arm.

US20160356737A1 discloses an electronic circuit for detecting the change in capacitance in a measuring capacitor formed between an electrode (pipetting tip) and the working table for liquid level detection in a test tube and differencing between the presence of liquid or foam in the test tube. The electronic circuit includes at least one comparator unit detecting the charging time for the measuring capacitor in response to a source voltage directed to the electrode.

### DESCRIPTION OF THE INVENTION

The pipetted volume of automated liquid handlers must be precisely measured for Quality Control (QC) and regular functionality testing. Current methods require external and expensive devices such as balances and photometers, that are inconvenient to transport and/or require a trained Field Service Engineer (FSE) for quality checks. There is a need for an automated and reliable method for detecting the dispensed volume that is integrated in the laboratory automation apparatus that can be easily used for a regular functionality or quality check by the user of the device or by the field service engineer.

It is an objective of the present invention to overcome the disadvantages of the prior art and provide a laboratory automation apparatus with a volume calibration functionality using capillaries without adding external analytical testing devices. It is an objective to provide a simple method for measuring the dispensed volume of the laboratory automation apparatus based on capacitive volume measurements from liquid dispensed in capillaries. It is a further an objective to provide a computer program for executing the method.

Those objectives are solved by the independent claims, further exemplary embodiments are evident from the dependent claims and the following description including the Figures.

An aspect of the invention relates to a laboratory automation apparatus or a laboratory system with a liquid volume measurement functionality. The laboratory automation apparatus includes a working table defining an x-y plane and an automated liquid handler with a pipettor including a pipetting head or pipetting channel with an electrode. The electrode provides a capacitive sensor or measuring capacitor in combination with a reference electrode. A robotic arm is configured to move the pipetting head with the electrode in a space above the working table. A processor is operatively coupled to the robotic arm, to the pipettor and to the electrode by an electronic circuit. A capillary or microfluidic chip is located on a defined x-y position on the working table with at least a part of the capillary (or the chip) oriented essentially parallel to the working table. The capillary includes an opening for receiving a target amount of liquid from the pipettor and is further configured to draw the liquid from the opening into the capillary to form an air-liquid meniscus. The robotic arm is configured to hover the electrode of the pipetting head over the capillary to detect a change in capacitance by the measuring capacitor which is related to the position of the meniscus, and the processor is configured to calculate the received amount of liquid in the capillary from the position of the meniscus.

The pipettor is part of a liquid handling device and the liquid handling device may include a positive displacement pipette, a system liquid filled pipette and/or an air displacement pipette for aspirating and/or dispensing liquids. The liquid handling device may include piezo-electric or acoustic dispensers and other types of dispensers. The pipettor may include a pipetting tip fixed to the pipetting head or a disposable tip may be releasable connectable to the pipetting head.

The electrode may include a disk, a plate, a pipetting tip or a needle or may be integrated into other features of the pipettor. The electrode is part of a measuring capacitor together with a reference electrode; the reference electrode may include the working table or include a dedicated reference electrode. The reference electrode may include a plurality of electrically conductive parts surrounding the electrode of the pipetting head. The electrode or at least a part of the electrode may be oriented parallel to the reference electrode, for example parallel to the working table.

The capillary or microfluidic chip may be positioned in the capacitive sensor between the electrode and the reference electrode for detecting the position of the meniscus.

The robotic arm is configured to move the pipetting head in a space above the working table and the robotic arm may move the pipetting head in the x-y-z direction. The pipetting head is preferably oriented along the z-axis perpendicular to the working table and the robotic arm preferably moves the head orthogonally such that the pipetting head remains oriented vertically during movement thereby retaining the orientation of the electrode with respect to the reference electrode.

The processor in the electronic circuitry enables, amongst other features, the control for the movement of the robotic arm, the control of the pipettor, for example the control for the air displacement pump in the pipettor. The processor processes the signals received from the measuring capacitor and is capable to measure the characteristics of the measuring capacitor consisting of the pipette tip and its environment including the reference electrode. The electronic circuit may include a pulse generator for generating electric pulses to the electrode or to the reference electrode.

The capillary may be a glass capillary or a plastic capillary. A plastic capillary may be manufactured by embossing a fluid guide path in a polymeric material and the guide path is subsequently covered by a sheet. Alternatively, the fluid guide path is made by injection molding, laser cutting nanoimprint technology. The path of the capillary may have a linear shape, a curved shape or may meander by going back and forth. The width and depth of the capillary (the cross-sectional area) is preferably constant along the fluid guide path. The capillary channel may be open or closed to prevent evaporation. The surface of the capillary intended for liquid contact may be treated to form a hydrophilic surface facilitating the fluid migration within the capillary. The capillary may be included in a labware component which may be a consumable product whereby the capillary is used only once. The labware component may be a reusable product whereby the capillaries are emptied after use (for example sucking the liquid out of the capillary) or the capillaries are exchanged. Alternatively, the capillaries including the holders and entrance sections are all designed as a disposable product. The labware component may be a microfluidic chip including a plurality of capillaries and each having a detection zone for detecting a certain amount of liquid.

The capillary may be oriented essentially horizontal on the working table and the electrode or a distal end of the electrode may be oriented parallel to the working table as well. Moving the pipetting head with the robotic arm thereby keeps the end of the electrode parallel to the working table. The robotic arm may tilt or rotate the pipetting head with the electrode thereby enabling accurate measurement of capillaries that are in a tilted or even in a vertical position on the working table.

The capillary may have two openings at each end for connecting the capillary to the ambient. One end of the capillary may be connected to the opening configured to receive the liquid from the pipettor. The opening configured to receive the liquid may have a cone shape or cylindrical shape. The size of the opening provides an entrance section facilitating insertion of a pipetting tip using either a manual pipettor or the automatic pipettor of the laboratory automation apparatus. The target volume may be aspirated by the pipettor, for example by controlling the plunger movement in an air displacement pipettor. The target volume may be selected based on the pipetting tips used and the target volume may be included in the factory settings. The received volume in the capillary is the volume of liquid that will be checked in a routine check or for QC purposes against the target volume to determine whether the pipettor accurately delivers the intended amount of liquid.

An air-liquid meniscus/ boundary may be formed at the fluid front towards the end in the capillary and/or towards the opening of the capillary and one or both meniscuses may be used for detecting the amount of liquid received in the capillary. The entrance section of the capillary or the opening on the entrance section may be designed such that all liquid is drawn into the capillary. The opening may be, for example, have a hydrophobic surface for promoting the liquid flow from the entrance into the hydrophilic capillary.

The defined position of the capillary in the x-y plane may be checked by the laboratory automation apparatus which may be executed using a capacitive sensor as disclosed in, for example, US20240217102A1. The defined position in the z-direction may be detected using a force-controlled movement lowering the pipetting head until halted upon abutment of the top surface of the holder holding the capillary or the top surface of the capillary or the assembly holding a plurality of capillaries. The capillary axis may be aligned with the electrode scan axis by capacitive scans of a calibration structure (triangular recess or channels) or by using the liquid filled capillaries directly. In the latter case, scans orthogonal to the capillary-axis can be used to determine translational- and rotational-shifts of the capillary-axis relative to the electrode scan-axis. The robotic arm with the electrode is subsequently raised to create a defined off-set in the z direction between the electrode and the capillary creating a defined air gap between the top surface of capillary and the electrode. The robotic arm moves in the x direction, or the y direction or both the x and y directions for scanning the surface of the capillary thereby hovering over the capillary. The robotic arm may first go to a defined x-y position and perform a linear scan for hovering along the direction of the fluid path of a single capillary or for hovering over the detection sections of a plurality of capillaries. Once the electrode reaches the fluid front in the capillary, a sudden change from a capillary filled with liquid to a capillary filled with air is provided. This changes the dielectric medium and therewith impedance for the measuring capacitor. A change in capacitance is detected and this is used for determining the position of the meniscus in the fluid path. The dimensions of the capillary are known and may be stored in a storage unit of the processor and used for calculating the volume of liquid received in the capillary. The dimensions of the capillary may be computer readable encoded, e.g. by 2D barcode or RFID tag, on the labware product comprising the capillary.

Alternatively, the position of the meniscus in a fluid path is determined for a laboratory chip having a channel providing a fluid path for liquids to be processed. Such chips may include DNA sequencing chips where DNA fragments are dissolved in a sample liquid and the liquid is guided through a path in the chip. The detection of the meniscus at the front of the liquid may be beneficial for detecting if the chip is ready for use as the liquid path may need to be prepared or wetted with a conditioning or washing liquid or the position of the meniscus may indicate that a certain processing step has been finished or even for detecting the end-of-life of the chip.

The capacitive measuring unit may be included in the laboratory automation apparatus for liquid level detection (see for example US20160356737A1) whereby a pipette vertically approaches and touches a horizontally oriented meniscus in a test tube. The capacitive measuring unit is used in the current disclosure specifically for detecting the meniscus that is oriented vertically inside the capillary and the position is used for measuring the liquid volume dispensed into the capillary. The measurement does not require liquid contact or additional analytical testing devices such as a photometer or an accurate balance and the laboratory automation apparatus thereby provides a simple and reliable verification method that can be applied by the daily user of the device and/or by a field service engineer.

The electrode may be the distal end of a pipetting tip attached to the pipetting head of the pipettor. The pipetting tip may be a fixed pipetting tip permanently coupled to the pipetting head of the pipettor. Alternatively, the pipetting tip is a disposable pipetting tip releasable connectable to the pipetting head. The pipetting tip, whether reusable or disposable, is at least partially electrically conductive. The pipetting tip may be made from a metal, paper (cellulose) or plastic. The surface of the pipetting tip may be at least partially covered with a conductive coating or a conductive strip is integrated into the wall of the pipetting tip. The plastic material may be carbon filled, for example a graphite filled polymer selected from, for example, a polyethylene, a polypropylene, a polystyrene, polymethylmethacrylate or a polycarbonate. The end of the tips surrounding the liquid outlet may provide the electrode.

The disposable pipetting tip used as an electrode may have been used previously with the pipettor for dispensing the target volume of liquid into the capillary or the disposable pipetting may be used as an electrode only.

Alternatively, a dedicated electrode is attached to the distal end of the pipetting head. The dedicated electrode may be permanently coupled or integrated into the pipetting head or may be releasably attachable to the distal end of the pipetting head. The dedicated electrode may have a tip with narrow dimensional tolerances, for example a sharp pin.

Alternatively, the distal end of the pipetting head which may include a coupling unit or cone for connecting to a pipetting tip may provide the electrode.

The received or transferred amount of liquid may be calculated as the cross-sectional area of the capillary multiplied by the length of the filled liquid path defined by the entrance of the capillary and the detected position of the meniscus. The dimensions of the capillary and the shape of the fluid path may be stored in the storage device for calculating the received amount of liquid. The capillary may have dimensions in the micrometer range and the size may depend on the target volume. For example, a height and width below 500 micrometers, preferably below 100 micrometers, more preferably below 50 micrometers may be selected. The capillary may have a circular or semi-circular cross section with a diameter below 500 micrometers, preferably below 100 micrometers, more preferably below 50 micrometers. The capillary may have a rectangular, V-shaped, T-shaped or U-shaped cross section with an upper width of the opening below 500 micrometers, preferably below 200 micrometers, more preferably below 100 micrometers. The lateral dimensions of the capillary may be constant along the flow path or there may be a variation in width/height or diameter of the capillary. Very narrow channels (for example below 20 micrometers) may lead to imprecise measurements as at some point the resistive part of the complex permittivity is getting significant.

The capillary may include flow restrictors. The capillary may include a defined reservoir in the flow path for absorbing a significant (for example 80%) of the target volume. The capillary is fluidly coupled to the reservoir for absorbing, for example, 30% of the target volume. The capillary may include a ventilation capillary or a degassing membrane to prevent air pockets or air bubble formation in the capillary.

In another aspect a method for measuring the dispensed volume of a laboratory automation apparatus is disclosed. The laboratory automation apparatus comprising:
- a working table defining an x-y plane,
- a robotic arm configured to move a pipettor comprising a pipetting head in a space above the working table,
- an electrode being coupled to the pipetting head or being the distal end of the pipetting head, the electrode providing a capacitive sensor with a reference electrode,
- a processor operatively coupled to the robotic arm, to the pipettor and to the electrode by an electronic circuit,
- a capillary located on a defined x-y position on the working table between the electrode and reference electrode, with at least a part of the capillary oriented essentially parallel to the working table, the capillary having an opening for receiving a liquid,
the method comprising the following steps:
- aspirating an amount of liquid by the pipettor,
- directing the robotic arm comprising the pipettor to the opening of the capillary,
- dispensing a target amount of liquid into the opening whereby the liquid is drawn into the capillary to form an air-liquid meniscus or air-liquid phase boundary, wherein the target amount of liquid may be less then the amount of liquid aspirated by the pipettor,
- hovering the electrode over the capillary using the robotic arm,
- detecting a change in capacitance for the capacitive sensor indicating the position of the meniscus in the capillary,
- calculating the received or transferred amount of liquid in the capillary using the detected position for the meniscus and the dimensions of the capillary.

The robotic arm may move the pipetting head of the pipettor along the x, y and z axis. The reference electrode may include the working table. The x-y position of the pipettor may be checked first using dedicated topographic structures on the working table in combination with the capacitance measurement unit as presented, for example in US20240217102A1.

The position of the capillary (defined x-y position) may be subsequently approached by the robotic arm with the pipettor. The topographic structures may be included in the holder for the capillary, in the labware product comprising the capillary or in the working table.

The check on the z-position: The pipettor with or without a pipetting tip may be lowered in a force-controlled manner and may be halted once the pipetting tip or the pipetting head touches the top surface of the capillary or the top surface of the holder holding the capillary. The force-controlled measurement may be repeated, for example on each corner of the holder or each corner of the top surface of the capillary assembly. The reference z-height may be defined or an averaged reference z-height may be defined from the force controlled measurements. An offset z-height or hovering height is added to the reference height for hovering the pipetting head over the capillary. The pipetting head preferably remains at a constant hovering height. Optionally, the hovering height changes with the x or y position, for example when the capillary has been tilted.

The capillary for receiving the liquid may have the entrance section that may have a hydrophobic surface and the capillary may have a hydrophilic surface as mentioned above. The target volume may be aspirated by controlled displacement of an air displacement unit connected to the pipetting head and the target volume may be dispensed into the opening of the capillary using the air displacement unit.

The target amount may be dispensed using free or contact dispensing techniques.

The amount of volume may be calculated from the distance of the fluid path between the opening and the detected position of the meniscus at the fluid front. Alternatively, the position of the starting meniscus and the end meniscus in the capillary is detected and used for calculating the received amount of liquid.

The method may be used by an operator of the laboratory automation apparatus for a routine check of the dispensed volume from the pipettor or the method may be used for quality control purposes by a field service engineer providing service to the laboratory automation apparatus. Alternatively, the method is used for factory calibration of the pipettor in the laboratory automation apparatus. The method may be used without requiring external and expensive external analytical testing devices such as photometers and/or balances.

In an embodiment, the method may include additional steps such as, for example comparing the received amount (Vᵣ) of liquid with the target amount (Vt) and recalibrating the pipettor or sending an alarm signal to the user if there is a difference between the received amount and the target amount. The target amount is preferably stored in a storage unit of the electronic circuitry and the difference D between the two values calculated as D=(Vₜ-Vᵣ)/Vₜ*100% may be more than 1%, or more than 5% or more than 10%, or more than 20 % before an alarm signal is released or before the pipettor needs to be recalibrated.

An automatic recognition of a deviation between the target volume and the dispensed volume by the pipettor may increase the reliability of the device and prevent using a non-accurate laboratory automation apparatus in combination with expensive processing liquids or sample liquids.

In another embodiment, a conductive pipetting tip is attached to, or attachable to the pipetting head of the pipettor when executing the method and the distal end of the conductive pipetting tip provides the electrode. The distal end surface surrounding the opening may provide the electrode or the electrode is separate from that distal end surface. The conductive pipetting tip may be a reusable pipetting tip or a disposable pipetting tip.

The same conductive pipetting tip may be used for dispensing the target amount of liquid into the opening of the capillary and for hovering over the capillary. Alternatively, the conductive pipetting tip is used for scanning the capillary only and the capillary was filled before with liquid by another pipetting tip. The conductive pipetting tip may be used for scanning or hovering over the capillary that has been filled before with liquid by another pipetting tip, or the same conductive pipetting tip is used both for dispensing the target amount of liquid into, and for hovering over the capillary for detecting the meniscus.

Using a separate non-used pipetting tip for the scanning may prevent that the electrode is contaminated by droplets that remain attached to the distal end of the tip from a previous aspiration/dispensing step.

An electrical impedance measurement is used to detect the position of the meniscus or phase boundary in the capillary. The change in electrical impedance may be detected as a change in absolute capacitance or relative capacitance for the capacitive sensor upon hovering over the meniscus. For example a source voltage may be applied across the electrode and reference electrode and the change of dielectric medium from air to water is detected while crossing the meniscus or air-liquid phase boundary. Alternatively, the change in capacitance is detected by an electronic circuitry using charge-based or oscillation-based measuring techniques. For a charge-based technique, the charging or discharging of the capacitor may provide the feedback signal in response to the input signal (source voltage) directed to the electrode. The input signal may be directed to the electrode, or to the reference electrode, or to both the electrode and the reference electrode. The input signal or source voltage may be modulated and have different wave forms for example a sine, square, triangular, sawtooth or pulse shaped wave form. The change in charge time may be detected using dedicated sensors that are included in the electronic circuit. The input signal is preferably modulated in the Kilohertz frequency range.

Optionally, a reference scan is executed whereby the electrode hovers over an empty capillary to determine parasitic capacitances from surrounding equipment in the laboratory automation apparatus. The capacitance changes in the reference scan may be subtracted from a detection scan whereby the electrode hovers over the liquid filled capillary. Alternatively, the section with the meniscus may be repeatedly scanned going back and forth over the region of interest and the multiple scans may be averaged.

The input signal may be a Pulse Width Modulated (PWM) signal and the electronic circuit may include at least one Time to Digital Converter (TDC) or comparator unit for detecting the time required for the feedback signal to reach a threshold voltage defining the charge time for the capacitor. Alternatively, the electric circuit includes two or more comparator units for detecting, for example a lower and upper threshold voltage for detecting the charge time of the capacitor.

The received amount of liquid may be calculated as the cross-sectional area of the capillary multiplied with the liquid filled length in the capillary. The filled length may be defined by the detected position of the meniscus at the liquid front or may be defined by the meniscuses detected at the start and at the end of the liquid filled fluid path.

The liquid used in the method for measuring the dispensed volume of a laboratory automation apparatus may be water, de-ionized water or ionized water, for example a salt solution such as a saline solution. Alternatively, an organic solvent is used. The liquid used may be additionally colored with a dye for optical monitoring the filling of the fluid path.

The capillary used in the method or in the laboratory automation apparatus may be constructed from a plastic material received in a carrier and the carrier may be located at the defined x-y position. An additional metal plate or a metal rack may be stacked between the working table and the holder. The additional metal plate acts as a low impedance grounding and the plate may be integrated into the holder for the capillary or even provide the holder for the capillary. The capillary may be embossed in a flat piece of a polymeric material and the top surface may be subsequently sealed with a plastic cover closing the capillary. Alternatively, the topography for the channel is constructed by injection molding of a plastic sheet and the channel is closed by a cover. As yet another alternative sheet molding processes, laser ablation or micro indention processes are used for generating the channel.

In another aspect, a computer program for measuring the dispensed volume of a laboratory automation apparatus is presented, and the computer program, when being executed by a processor is adapted to carry out the steps of the method. The processor may be part of the laboratory automation apparatus or may be a separate processor.

Another aspect relates to a computer readable medium in which the computer program is stored. The computer readable medium may be a disc, USB stick or a hard drive. The computer readable medium may be part of a cloud solution.

These and other aspects of the invention will be apparent from and elucidated with reference to the embodiments described hereafter whereby embodiments or aspects of embodiments may be combined.

### BRIEF DESCRIPTION OF THE DRAWINGS

Embodiments of the present invention are described in more detail with reference to the attached drawings presenting:
- Figure 1:: Perspective view of a laboratory automation apparatus with two pipetting heads for holding disposable pipetting tips,
- Figure 2:: Perspective view of a laboratory automation apparatus with a pipettor with a fixed, reusable pipetting tip,
- Figure 3:: Schematic representation of a laboratory automation apparatus with a pipetting tip approaching an empty capillary present on the working table,
- Figure 4:: Schematic representation of a laboratory automation apparatus with a pipetting tip scanning a liquid filled capillary,
- Figure 5:: Schematic representation of a liquid filled capillary scanned by a pipetting tip,
- Figure 6:: Charge time for the capacitor detected in the feedback signal in response to a PWM input signal,
- Figure 7:: Schematic layout for measuring the capacitance C,
- Figure 8:: Example for the impedance for the capacitor versus the position along the x-axis,
- Figure 9:: Derivate for the detected impedance in Figure 8 versus the position on the x-axis,
- Figure 10:: Block diagram presenting the steps for the method for measuring the dispensed volume of a laboratory automation apparatus.

### DETAILED DESCRIPTION OF EXEMPLARY EMBODIMENTS

Definition: The distal end or distal direction is defined by the flow direction for the liquid, thus the distal tip of a pipette is defined by the outlet of the pipette tip and the proximal end is opposite to the distal end. The indefinite article "a" or "an" does not exclude a plurality. For example, "a pipetting head" does not exclude the fact that there may be two pipetting heads that functionally or structurally fulfill the purpose of "a pipetting head". A meniscus may imply that there is a front and back-end meniscus in the fluid path. In the claims, the word "comprising" does not exclude other elements or steps. Another wording for a pipetting head is a pipetting channel or tip adapter. The term meniscus is used throughout the disclosure for an air-liquid phase boundary oriented essentially perpendicular to the capillary axis.

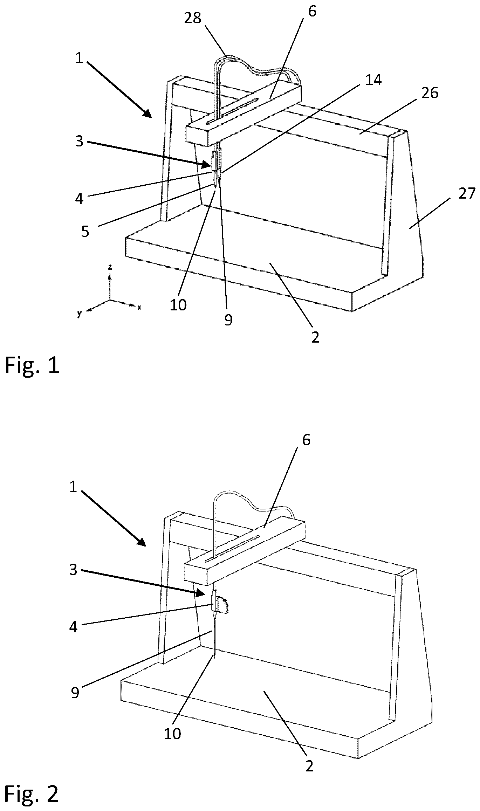

Figure 1 presents a perspective view of a laboratory automation apparatus 1 including a working table 2. The working table 2 defines an x-y plane and a beam 26 holding a robotic arm 6 is axially offset in the z-direction and supported by two side posts 27. A space is available between the working table 2 and the beam 26 for movement of a pipettor 3 by the robotic arm 6. Labware components may be placed and moved on the working table by using the same robotic arm 6 whereby the pipettor 3 has been exchanged by grippers for gripping the labware components, or the laboratory automation apparatus 1 includes a second robotic arm with a gripping unit dedicated for moving and handling the labware components on the working table 2. The labware components may include microplates, trays, dishes, pipetting tip holders, sample containers, liquid supply, holders for sample or processing liquids, waste containers and the like. Sample testing and handling devices may be on the working table such as shakers, thermocyclers, mixing devices, microplate readers or microfluidic chips. The pipettor 3 is attached to an air displacement unit 28 or to a system liquid filled tubing connected to a syringe pump which may provide an under- or overpressure to a pipetting head or pipetting channel 4 that is included in the pipettor 3. An electrode 5 may be attached to the pipetting head 4. The electrode 5 may be part of the pipetting head 4. In the example in Figure 1, two pipetting heads are presented, one without a pipetting tip attached and one with an attached tip. Both the distal end of the pipetting head itself or the distal end of a pipetting tip attached to the pipetting head 4 may act as electrode 5. Alternatively, a separate electrode 5, for example a metal pin is attached to the pipetting head 4.

The electrodes 5 in Figure 1 may be releasably attachable to the pipetting head 4. A pipetting tip 9 may be attached to the distal end of the pipetting head 4 separate from the electrode 5 and the pipetting tip may be used for aspirating liquids from a sample container using the air displacement unit 28 creating an under pressure in the pipetting tip. The sample liquid may be dispensed by applying an overpressure within the pipetting tip using the air displacement unit 28. The pipettor 3 includes a capacitance sensor 14 that may be used for detecting changes in capacitance indicative for touching the liquid in the sample container before starting the aspiration of the liquid. The pipetting tip 9 may serve a dual purpose in that it provides the electrode 5 for the sensor and the liquid handling feature. The distal end 10 of the pipetting tip 9 may, for example, provide the electrode 5 for the capacitance sensor 14. The capacitance sensor 14 may include a reference electrode that includes the working table 2 or a low impedance grounding plate. The capacitance sensor 14 may further include the electrode 5 and a plurality of surrounding electrodes that may even provide parasitic capacitances that need to be eliminated for noise reduction in the detected signal. The electrode 5 of the capacitance sensor may be charged by a charging unit or signal generator as will be explained in detail below. The laboratory automation apparatus 1 depicted in Figure 1 includes two separate pipetting heads or two channels each equipped with a pipetting head 4 and an electrode 5. Multichannel pipettors with two, four, eight or sixteen channels may be designed without deviating from the working principle of the laboratory automation apparatus and each channel may be equipped with a capacitance sensor 14. The laboratory automation apparatus includes a processor or processing unit 12 for controlling the apparatus and signal processing of the signals received from the capacitive sensor 14.

Another example of a laboratory automation apparatus 1 is presented in Figure 2 which is essentially identical to the apparatus in Figure 1. The apparatus includes a one channel pipettor 3 and the pipetting tip 9 is fixedly attached to the pipetting head 4. The pipettor 3 may include a separate electrode 5 or the distal end 10 of the pipetting tip 9 may provide the electrode 5 for the capacitance sensor.

The accuracy for the aspirated and dispensed amount of liquid is a paramount feature for the laboratory automation apparatus which is checked as a factory parameter during QC testing before delivery to the customer, or as a routine control check by the operator of the apparatus, or by a field service engineer subsequent to periodic maintenance. The operator or field service engineer may use a separate balance for measuring gravimetrically the dispensed amount of liquid or use absorbance measurements from a photometer. Both methods require additional external equipment and trained operators.

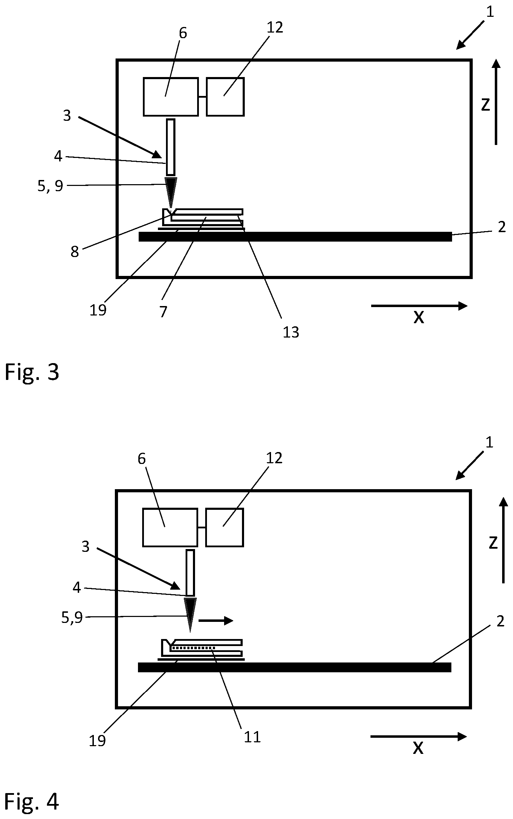

In the current disclosure a capillary 7 in combination with a capacitance measurement is used for checking the volume dispensed from the pipettor 3 as schematically presented in Figures 3 and 4. A capillary 7 is positioned at the working table 2 and the axis of the capillary 7 is oriented horizontally.

Alternatively, the axis may be oriented vertically or at any angle between zero and ninety degrees from the working table 2. A target amount of liquid is pipetted into an opening 8 of the capillary and the liquid migrates into the capillary 7 towards an exit 13. The length and the dimensions of the liquid filled path define the amount of liquid received in the capillary 7. The capacitance sensor is used for determining the length of the liquid filled path as the capillary is positioned between the electrode 5 and the working table 2 which is part of the reference electrode.

The robotic arm 6 is coupled to a processor 12 by an electronic circuit and the processor 12 controls the movement of the robotic arm 6 holding the pipettor 3 with the electrode 5 attached to the pipetting head 4. A pipetting tip 9 is attached to the pipetting head 4, for example by pick-up of a disposable pipetting tip 9 from a labware component such as a tray holding disposable pipetting tips. The pick-up may be an automated pick-up whereby the robotic arm 6 is moved to the tray holding the pipettes and the pipetting head 4 is lowered for engaging the collar of a pipetting tip to the pipetting head 4. The pipettor 3 is subsequently moved to a liquid container positioned in a labware component on the working table 2 and lowered until the liquid level is detected. The processor 12 controls the air displacement unit 28 of the pipettor 3 and a target amount of liquid is aspirated into the pipetting tip 9. The robotic arm 6 is subsequently moved to the opening 8 of the capillary 7 and the target amount of liquid is dispensed into the opening 8. The dispensing step may be with contact between the distal end of the pipetting tip 9 and the opening 8 or there may be an air gap during so-called free dispensing. The opening 8 may be cone shaped and the distal end of the pipetting tip 9 may slide over the cone towards the cone center before starting contact dispensing. The liquid used for determining the dispensed volume may be water, deionized water, or an ionic solution, for example a saline solution. The liquid may be colorless or colored using a dye such as Methyl Orange or Crystal Violet.

The positions in the x-y plane of the tray holding the disposable tips, the position of the opening 8 of the capillary 7 or the position of the holder 19 holding the capillary 7 may each be checked using a capacitive sensor measurement using a dedicated topographic structure as explained in US20240217102A1.

The liquid is drawn into the capillary 7 and a liquid front with a meniscus 11 or air/liquid phase boundary migrates to the exit 13 of the capillary 7, see Figure 4. The electrode 5 and/or the pipetting tip 9 is moved to a z-position with a defined distance with respect to the top surface of the capillary 7 defining a hovering height and the electrode 5 and/or the distal end 10 of the pipetting tip is moved over the surface of the capillary 7 for identifying the position of the meniscus 11 using the capacitance sensor as will be explained below.

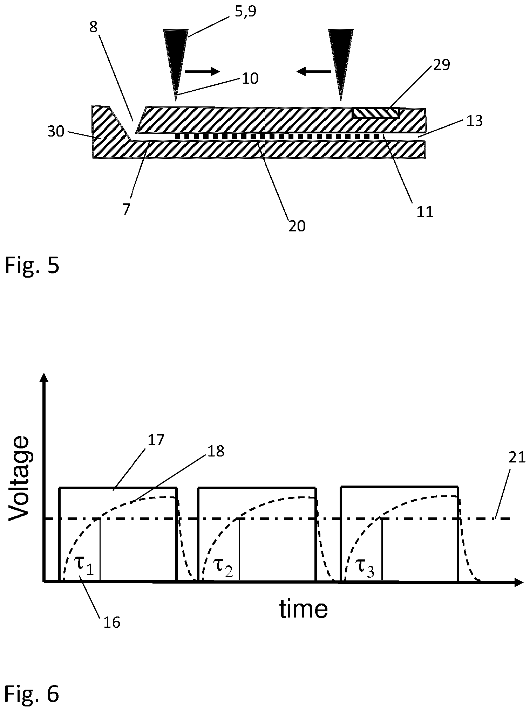

A schematic representation of a capillary 7 is presented in Figure 5. The capillary has a known and calibrated geometry. The capillary may be inserted in a separate housing 30 or the capillary 7 is integrated in the housing 30. The capillary may be included in a disposable labware component. The target amount of liquid has been pipetted into the opening 8 of the capillary and the distance travelled by the liquid 20 depends on the surface properties of the capillary 7, the surface properties of the opening 8, the geometry of the capillary and the surface tension for the liquid chosen. In the example presented in Figure 5, all liquid has been drawn into the capillary and a front-end and back-end air/liquid phase boundary (meniscus) may be available for detection by the capacitance sensor. Alternatively, a small amount of liquid remains attached to the entrance section 8 of the capillary with a known position. In this case only the front-end meniscus 11 needs to be detected for determining the length of the liquid filled path. The front-end meniscus 11 migrates towards a region of interest section 29 where the liquid front is expected to end when the target amount of liquid is drawn into the capillary. The region of interest 29 may be a transparent section in the capillary and/or in the housing 30 holding the capillary or the whole housing is transparent. The region of interest 29 may include a graduated scale for optical recognition of the front end of the liquid. The length of the path multiplied by the cross-sectional area of the capillary defines the amount of liquid received in the capillary which may be compared with the target amount, either by the operator, the field service engineer or by the processor after automatic computation of the amount of liquid received. The received amount may be compared with the target amount stored in a storage unit.

The pipetting tip 9 used for aspiration and dispensing the target amount into the capillary 7 may be subsequently used as an electrode 5 for the capacitance sensor. Alternatively, the pipetting tip 9 used for dispensing into the capillary is discarded and a new and unused pipetting tip is used as an electrode 5. As yet another alternative, no pipetting tip is attached and either the distal end (cone) of the pipetting head 4 functions as the electrode 5 or a separate and dedicated electrode 5 is attached to the pipetting head 4. The dedicated electrode 5 may be a metal pin with a well-defined tip geometry. Using pipetting tips 9 as electrode 5 requires that the pipetting tips are at least partially electrically conductive. The pipetting tips may be made from, for example, carbon filled polymers such as polypropylene.

The electrode 5 or distal end 10 of the pipetting tip 9 hovers or scans over the capillary 7 as indicated by the arrows in Figure 5. The electrode 5 or distal end 10 of the pipetting tip may perform a plurality of scans, for example from left-to-the-right or from right-to-left. The scan is preferably a linear scan along the x-axis or along the y-axis. Optionally also a scan along a diagonal may be performed by simultaneous movement of the robotic arm along the x-axis and the y-axis. The scan speed may vary between 0.5 and 100 mm/s, preferably between 5 mm/s and 50 mm/s, more preferably between 10 mm/s and 30 mm/s.

A reference scan for an empty capillary may be executed before scanning a filled capillary. The multiple scans may be used for averaging the signals from the capacitance sensor for noise reduction or a reference scan may be subtracted to reduce the influence of parasitic capacitances surrounding the capillary.

A signal generator or charging unit is coupled to the processor 12 and the electronic circuit and an input signal (source voltage) is directed to the electrode 5 or the pipetting tip 9. The input signal may be a modulated signal and may represent a switch in the electronic circuity such that the electrode 5 is charged when the switch is closed and discharged when the switch is opened. Alternatively, the signal generator or charging unit operates in an oscillatory mode thereby partially charging and discharging the capacitive sensor. The charging and discharging of the capacitor is detected in a feedback signal and the speed for the charging and discharging depends on the impedance of the capacitor. When the electrode 5 or the distal end 10 of the tip moves across the meniscus, then the dielectric medium locally changes from liquid to air when passing the phase boundary and this change results in a change of impedance, resulting in a different charge time for the capacitive sensor.

As an example, a Pulse Width Modulated (PWM) signal 17 as depicted in Figure 6 is directed to the electrode for charging and discharging the capacitive sensor. The voltage is increased/decreased stepwise and the feedback signal 18 (capacitor voltage) increases and levels off towards the source voltage. The frequency of the PWM signal may be in the Kilohertz range, for example between 0.1 and 10 kHz, preferably between 1 and 5 kHz such that the capacitor may not be charged completely. The charge time 16 for the capacitance sensor is defined by the time required for reaching a threshold voltage 21. During each cycle of the PWM signal a charge time τᵢ 16 may be detected and averaged values may be computed.

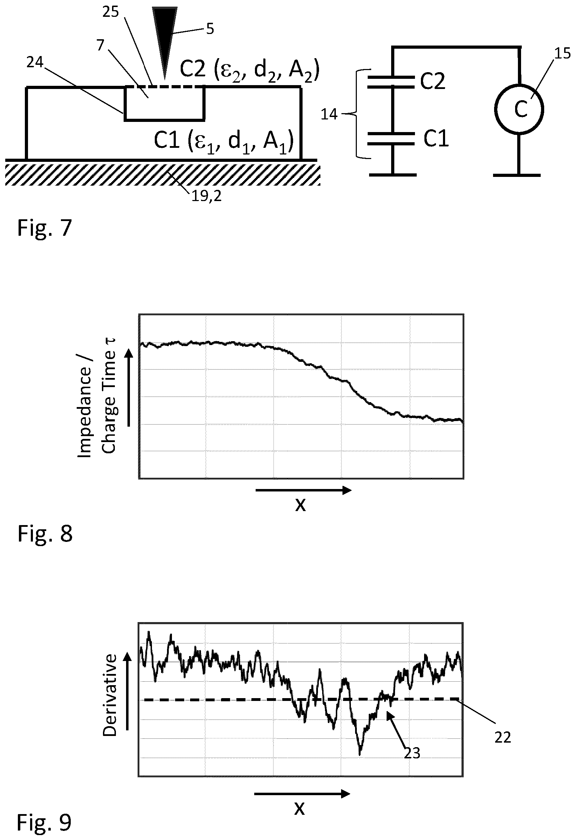

A schematic representation for the capacitive sensor 14 is presented in Figure 7 together with a cross sectional view of the capillary 7. In this example, the capillary is a groove or slot 24 embossed in a plastic sheet and the groove or slot 24 is closed by a cover sheet 25 to form a capillary 7. Alternatively, the groove 24 is made by injection molding of a polymer using a mold with a positive rib extending from a flat surface. The groove presented in this example is a rectangular groove and the dimensions of the groove are preferably in the micrometer range. The width and height may be above 5 micrometers, preferably above 10 micrometers, preferably above 20 micrometers, preferably above 30 micrometers, preferably above 50 micrometers or preferably above 100 micrometers.

The capacitance C1 depends on cumulative sizes A₁, thicknesses d₁ and dielectric constants ε₁ of the materials stacked between the bottom of the capillary 7, and the working table 2. The capacitance C2 depends on the cumulative sizes A₂, the thicknesses d₂ and the dielectric constant ε₂ of the material present in the channel, the cover sheet 25 and the air gap between the tip of the electrode 5 and the cover sheet. The dielectric constant ε₂ depends on whether air or liquid is present in the capillary leading to a different capacitance C2. In the current embodiment, a comparator C 15 is included in the electronic circuit for detecting the change in capacitance C2 by measuring the charge time 16 of the capacitive sensor 14. Other means for measuring the capacitance may use a so-called capacitance-to-digital chip.

An example of the detected impedance versus the position x along the capillary is presented in Figure 8. The charge time t decreases as the electrode 5 or the distal end of the pipetting tip hovers over the region of interest in the capillary with the liquid-air meniscus. The curve changes from being convex to concave with an inflection point between the two. The derivative for the sinusoidal curve of the Figure 8 has been presented as one example for deriving the position of the inflection point of the curve representing a position of the meniscus. A threshold value 22 is indicated in Figure 8 defining the cut-off 23 as one means for defining the position of the meniscus. Other mathematic models may be used for deriving the position of the inflection point along the x-axis.

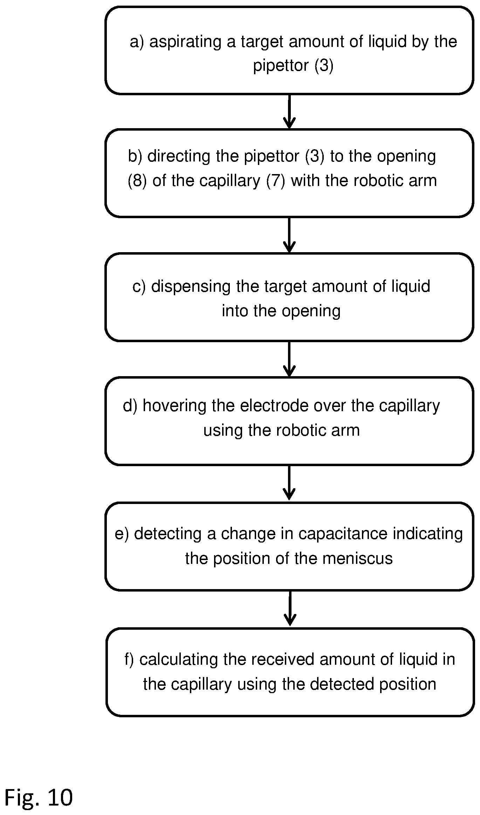

The steps for the method for measuring the dispensed volume of a laboratory automation apparatus are depicted in Figure 10;
a) aspirating an amount of liquid by the pipettor (3),
b) directing the robotic arm (6) comprising the pipettor (3) to the opening (8) of the capillary (7),
c) dispensing a target amount of liquid into the opening (8) whereby the liquid is drawn into the capillary (7) to form an air-liquid meniscus (11) whereby the target amount is below the aspirated amount,
d) hovering the electrode (5) over the capillary (7) using the robotic arm (6),
e) detecting a change in capacitance for the capacitive sensor (14) indicating the position of the meniscus (11) in the capillary (7),
f) calculating the received amount of liquid in the capillary using the detected position for the meniscus and the dimensions of the capillary or by using both the front-end and back-end meniscus together with the cross-sectional dimensions of the capillary.

Optionally the method includes step g)
g) comparing the received amount with the target amount and recalibrating the pipettor (3) or sending an alarm signal if there is a difference between the received amount and the target amount.

### LIST OF REFERENCE SIGNS

- 1: Laboratory automation apparatus
- 2: Working table
- 3: Pipettor
- 4: Pipetting head, pipetting channel
- 5: Electrode
- 6: Robotic arm
- 7: Capillary
- 8: Opening
- 9: Pipetting tip
- 10: Distal end pipetting tip
- 11: Meniscus
- 12: Processor
- 13: Exit
- 14: Capacitive sensor
- 15: Comparator C
- 16: Charge time
- 17: Input signal, source voltage
- 18: Feedback signal
- 19: Holder
- 20: Liquid
- 21: Threshold feedback signal
- 22: Threshold derivative
- 23: Cut-off
- 24: Embossed groove
- 25: Cover sheet
- 26: Beam
- 27: Post
- 28: Air displacement unit or syringe pump
- 29: Region of interest
- 30: Housing

## Claims

1. A laboratory automation apparatus (1) with a liquid volume measurement functionality comprising:
- a working table (2) defining an x-y plane,
- a pipettor (3) comprising a pipetting head (4) and an electrode (5) providing a capacitive sensor (14) with a reference electrode,
- a robotic arm (6) configured to move the pipetting head (4) above the working table (2),
- a processor (12) operatively coupled to the robotic arm (6), to the pipettor (3) and to the electrode (5) by an electronic circuit,
- a capillary (7) located on a defined x-y position on the working table with at least a part of the capillary oriented essentially parallel to the working table (2), the capillary (7) having an opening (8) for receiving a target amount of liquid from the pipettor (3) and being configured to draw the liquid from the opening (8) into the capillary (7) to form an air-liquid meniscus (11),
**characterized in that**
the robotic arm (6) is configured to hover the electrode (5) of the pipetting head (4) over the capillary (7) to detect a change in capacitance related to the position of the meniscus (11), and wherein the processor (12) is configured to calculate the received amount of liquid in the capillary (7) from the position of the meniscus.

2. The laboratory automation apparatus of claim 1, wherein the electrode (5) is the distal end of the pipetting head (4), or the distal end (10) of a pipetting tip (9) attached to the pipetting head (4) of the pipettor (3) or is the distal end of a dedicated electrode attached to the pipetting head.

3. The laboratory automation apparatus of claim 2, wherein the pipetting tip (9) is a disposable pipetting tip releasable connectable to the pipetting head (4) and the pipetting tip (9) is at least partially electrically conductive.

4. The laboratory automation apparatus according to any of the previous claims, wherein the received amount of liquid is calculated as the cross-sectional area of the capillary (7) multiplied by the length of the filled liquid path defined by the detected position of the meniscus (11).

5. A method for measuring the dispensed volume of a laboratory automation apparatus, the laboratory automation apparatus (1) comprising:
- a working table (2) defining an x-y plane,
- a robotic arm (6) configured to move a pipettor (3) comprising a pipetting head (4) above the working table (2),
- an electrode (5) coupled to the pipetting head providing a capacitive sensor (14) with a reference electrode,
- a processor (12) operatively coupled to the robotic arm (6), to the pipettor (3) and to the electrode (5) by an electronic circuit,
- a capillary (7) located on a defined x-y position on the working table (2), with at least a part of the capillary (7) oriented essentially parallel to the working table (2), the capillary (7) having an opening (8) for receiving a liquid,
the method comprising the following steps:
- aspirating an amount of liquid by the pipettor (3),
- directing the robotic arm (6) comprising the pipettor (3) to the opening (8) of the capillary (7),
- dispensing a target amount of liquid into the opening (8) whereby the liquid is drawn into the capillary (7) to form an air-liquid meniscus (11),
- hovering the electrode (5) over the capillary (7) using the robotic arm (6),
- detecting a change in capacitance for the capacitive sensor (14) indicating the position of the meniscus (11) in the capillary (7),
- calculating the received amount of liquid in the capillary using the detected position for the meniscus and the dimensions of the capillary.

6. The method according to claim 5, wherein the electrode (5) is the distal end of the pipetting head (4), or the distal end (10) of a pipetting tip (9) attached to the pipetting head (4) of the pipettor (3), or is the distal end of a dedicated electrode attached to the pipetting head.

7. The method according to claim 6, wherein an at least partially conductive pipetting tip (9) is attached to, or attachable to the pipetting head (4) of the pipettor (3) and wherein the distal end (10) of the conductive pipetting tip (9) provides the electrode (5).

8. The method according to claims 5 or 6 or 7, further comprising the following step:
- comparing the received amount with the target amount and recalibrating the pipettor (3) or sending an alarm signal if there is a difference between the received amount and the target amount.

9. The method according to any of the claims 5 to 8, wherein the change in capacitance is a change in charge time (16) for the capacitive sensor detected in a feedback signal (17) for the electrode in response to an input signal (18).

10. The method according to claim 9, wherein the input signal (18) is a Pulse Width Modulated (PWM) signal and wherein the electronic circuit comprises at least one comparator unit (15) for detecting the time required for the feedback signal (17) to reach a threshold voltage defining the charge time (16) for the capacitive sensor.

11. The method according to any of the claims 5 to 10, wherein the received amount of liquid is calculated as the cross-sectional area of the capillary multiplied with the filled length defined by the detected position of the meniscus.

12. The method according to any of the claims 5 to 11, wherein the liquid is a saline solution.

13. The method according to any of the claims 5 to 12, wherein the capillary is constructed from a plastic material received in a carrier and wherein the carrier is located at the defined x-y position and wherein an additional metal plate or a conductive rack is positioned between the working table and the holder.

14. A computer program for measuring the dispensed volume of a laboratory automation apparatus, which computer program, when being executed by a processor is adapted to carry out the steps of method claims 5 to 13.

15. A computer readably medium in which the computer program according to claim 14 is stored.
